Europäisches Patentamt

European Patent Office

Office européen des brevets

(11) Numéro de publication: **0 388 248**
**A1**

# (12) DEMANDE DE BREVET EUROPEEN

(21) Numéro de dépôt: **90400447.0**

(22) Date de dépôt: **19.02.90**

(51) Int. Cl.5: **C08L 23/28, C08L 23/34, C08K 13/02, A62D 5/00, //(C08L23/28,23:34,C08K3:06, 5:47,5:40)**

(30) Priorité: **27.02.89 FR 8902480**

(43) Date de publication de la demande:
**19.09.90 Bulletin 90/38**

(84) Etats contractants désignés:
**BE DE ES GB IT NL**

(71) Demandeur: **HUTCHINSON S.A.**
**2 rue Balzac**
**F-75008 Paris(FR)**

(72) Inventeur: **Lagarde, Jean**
**1, Impasse des Acacias**
**F-95260 Beaumont S/Oise(FR)**
Inventeur: **Massoulier, André**
**14 rue Camille St.Saens**
**F-95500 Gonesse(FR)**

(74) Mandataire: **Orès, Bernard et al**
**Cabinet ORES 6, Avenue de Messine**
**F-75008 Paris(FR)**

(54) **Matériau du type élastomère résistant aux agressions chimiques et à décontamination facile ainsi que composition pour sa fabrication.**

(57) Matériau du type élastomère à base d'un mélange de caoutchouc du type polyéthylène chlorosulfoné, de caoutchouc du type butyle halogéné et d'ingrédients usuels de fabrication des élastomères, comme des charges de renfort, des plastifiants, des agents de protection et analogues.

Il renferme de 85 à 50 parties en poids de caoutchouc butyle halogéné et de 15 à 50 parties en poids de polyéthylène chlorosulfoné pour résister aux agressions chimiques, notamment du type NBC d'une part et pouvoir être facilement décontaminé, d'autre part.

Application : Fabrication de pièces résistant à l'attaque chimique comme des joints, gants, bâches, ...etc.

EP 0 388 248 A1

## MATERIAU DU TYPE ELASTOMERE RESISTANT AUX AGRESSIONS CHIMIQUES ET A DECONTAMINATION FACILE AINSI QUE COMPOSITION POUR SA FABRICATION

L'invention a pour objet un matériau du type élastomère résistant aux agressions du type NBC (Nucléaire, Bactériologique, Chimique) notamment aux agressions chimiques et à décontamination facile, ainsi qu'une composition pour sa fabrication.

Les besoins existent, dans l'industrie, de pièces en matériau du type élastomère présentant les caractéristiques et propriétés que l'on attend de tels matériaux mais également doués d'une bonne résistance à la contamination chimique, d'une part et, faciles à décontaminer, d'autre part. De telles pièces trouvent application, par exemple, et sans que cette indication ait quelque caractère limitatif que ce soit -, pour la fabrication de joints mais aussi d'articles comme des toiles, des bâches, des gants, des combinaisons de protection, des masques, etc..., susceptibles d'être au contact de fluides chimiquement agressifs, par exemple des gaz comme des gaz de combat, en particulier l'ypérite, ou des liquides de mêmes caractéristiques chimiques que ces gaz.

On a déjà proposé de répondre à une partie de ce besoin, mais à une partie seulement, par exemple en fournissant un matériau résistant à l'agression chimique de gaz tels que l'ypérite, (EP-A-0 167 758 ou FR-1 468 124) ou encore en fournissant un matériau en feuille propre à résister au fluor et aux compositions à base de fluor, comme décrit dans US-A-3 513 064. Si ces documents font également état, à titre tout à fait auxiliaire, de la possibilité d'une décontamination du matériau ainsi exposé il ne s'agit pas dans les documents cités d'un objectif prioritaire, alors qu'il en est ainsi, par exemple, dans FR-A-2 345 552 qui vise un revêtement de sol pour laboratoire pouvant être décontaminé, mais qui ne vise pas l'agression chimique de composés comme l'ypérite étant donné que le type de polymères mis en oeuvre dans ce document est considéré comme étant de très faible importance.

On a également proposé d'obtenir une protection de longue durée à l'égard des agents chimiquement agressifs, avec simultanément une bonne imperméabilité et une bonne résistance à l'eau à l'aide d'un matériau "hétérogène", comme décrit dans FR-A-2 131 836, qui vise un tissu de protection comportant une pluralité de couches jouant chacune le rôle qui lui est dévolu, par exemple une couche de Néoprène ou de caoutchouc butyle ou de polyéthylène chlorosulfonné pour résister aux agents chimiques, une couche de matière synthétique conférant la souplesse requise et une autre couche d'élastomère pour la protection du tissu contre l'humidité, les bactéries et l'usure. Un tel tissu ne permet pas, bien évidemment, de fabriquer des pièces comme des joints ou analogues.

Il n'existe donc pas, à la connaissance de la Demanderesse, de matériau "homogène" propre à résoudre la totalité du problème posé mentionné ci-dessus.

C'est, par conséquent, un but général de l'invention de fournir un tel matériau du type élastomère et qui bénéficie donc de l'ensemble des propriétés caractéristiques de cette classe de matériaux, qui présente en outre une bonne ou très bonne resistance à l'agression chimique, notamment du type NBC, c'est-à-dire à la fois en ce qui concerne l'imperméabilité du matériau à l'agresseur, - liquide ou gazeux -, et la durée de résistance à cette agression, mais aussi dont la décontamination puisse être réalisée rapidement et facilement, après exposition à l'agresseur, et sans que le matériau n'ait ses caractéristiques altérées.

C'est, aussi, un but de l'invention de fournir une composition pour la fabrication de pièces en un tel matériau et, en particulier, de pièces dont le coût de revient ne soit pas excessif, c'est-à-dire fasse appel à des produits usuels du domaine des élastomères, et non pas à des élastomères très élaborés chimiquement dont le coût rendrait la réalisation de telles pièces prohibitive.

C'est, encore, un but de l'invention de fournir un matériau dont la mise en oeuvre soit semblable à celle des élastomères connus, et qui, de ce fait, peut d'abord être mis en forme par les techniques habituelles de moulage, d'extrusion, calandrage, confection, enduction, etc... mais aussi par les techniques usuelles de vulcanisation.

C'est, enfin, un but de l'invention de fournir un tel matériau qui ait aussi une résistance satisfaisante aux hydrocarbures pour permettre son application à la fabrication de pièces de l'industrie mécanique, en particulier automobile.

Il est maintenant apparu, à la suite des travaux effectués par la demanderesse, qu'un matériau résultant de la vulcanisation d'un mélange à base de caoutchouc du type polyéthylène chlorosulfoné et de caoutchouc du type butyle halogéné pouvait permettre d'apporter une solution aux problèmes posés.

Si quelques mélanges de caoutchouc du type polyéthylène chlorosulfoné et de caoutchouc du type butyle chloré sont déjà connus, par exemple par GB-A-853 738, de tels mélanges n'ont été proposés que dans un but très spécifique, à savoir celui de la réalisation d'enveloppes de pneumatique à flancs blancs et à l'aide d'une composition comprenant 80% de caoutchouc butyle chloré et 20% de caoutchouc polyéthy-

2

EP 0 388 248 A1

lène chlorosulfoné, en parties en poids.

A partir de cet état de la technique, l'invention propose un matériau du type élastomère à base d'un mélange de caoutchouc du type polyéthylène chlorosulfoné, de caoutchouc du type butyle halogéné et d'ingrédients usuels de fabrication des élastomères, comme des charges de renfort, des plastifiants, des agents de protection et analogues, caractérisé en ce qu'il renferme de 85 à 50 parties en poids de caoutchouc butyle halogéné et de 15 à 50 parties en poids de polyéthylène chlorosulfoné pour résister aux agressions chimiques, notamment du type NBC d'une part et pouvoir être facilement décontaminé , d'autre part.

Dans une forme de réalisation avantageuse le matériau comprend, en parties en poids :

| caoutchouc butyle halogéné | 85 à 50 |
|---|---|
| caoutchouc polyéthylène chlorosulfoné | 15 à 50 |
| magnésie | 2 à 5 |
| charge de noir de carbone | 30 à 60 |
| charge blanche | 0 à 20 |
| plastifiant | 5 à 20 |
| agent anti-chaleur | 1 |

Dans une réalisation préférée, le matériau comprend, en parties en poids :

| caoutchouc butyle halogéné | 70 |
|---|---|
| caoutchouc polyéthylène chlorosulfoné | 30 |
| magnésie | 4 |
| acide stéarique | 2 |
| noir de carbone | 50 |
| huile | 10 |
| anti-oxygène | 1 |

Conformément à un autre aspect de l'invention, celle-ci a également pour objet une composition vulcanisable comprenant un mélange de caoutchouc polyéthylène chlorosulfoné, de caoutchouc butyle halogéné, et d'ingrédients usuels comme des charges renforçantes, des plastifiants, des agents de protection à la chaleur et analogues et un moyen de vulcanisation à base d'oxyde de zinc, de MBTS (disulfure de mercaptobenzoilethiazole), de TMTD (disulfure de tétraméthylthiurame) et de soufre, ladite composition étant caractérisée en ce que pour la fabrication d'un matériau résistant aux agressions chimiques, notamment du type NBC et à décontamination facile, elle comprend, en parties en poids :

| caoutchouc butyle halogéné | 70 |
|---|---|
| caoutchouc polyéthylène chlorosulfoné | 30 |
| magnésie | 4 |
| noir de carbone | 50 |
| acide stéarique | 2 |
| huile | 10 |
| agent anti-oxygène | 1 |
| oxyde de zinc | 2 à 5 |
| MBTS | 0,5 à 2 |
| TMTD | 0,5 à 2 |
| soufre | 0 à 1 |

Dans une forme de réalisation préférée la composition comprend, en parties en poids :

3

| | |
|---|---|
| caoutchouc butyle halogéné | 70 |
| caoutchouc polyéthylène chlorosulfoné | 30 |
| magnésie | 4 |
| noir de carbone | 50 |
| acide stéarique | 2 |
| huile | 10 |
| agent anti-oxygène | 1 |
| oxyde de zinc | 4 |
| MBTS | 1 |
| TMTD | 0,8 |
| soufre | 0,4 |

C'est de façon tout à fait surprenante que la Demanderesse a élaboré ce matériau et cette composition, étant donné que si chacun des élastomères mentionnés ci-dessus est déjà connu dans l'art antérieur, par exemple pour des produits de revêtement, des peintures, ...etc, en ce qui concerne le polyéthylène chlorosulfoné, ou pour la fabrication de pièces comme des chambres à air,... etc, pour le caoutchouc butyle halogéné, on n'avait jamais, à ce jour, pensé réunir ces deux produits pour leur utilisation en vue de façonner des produits comme des joints, des gants, des combinaisons, des toiles ou bâches et analogues résistant aux agressions chimiques et à décontamination facile.

L'invention a également pour objet des produits façonnés comme des joints, des gants, des combinaisons, des toiles ou bâches, et analogues, résistant aux agressions chimiques et à décontamination facile, caractérisés en ce qu'ils sont mis en forme par extrusion, moulage, calandrage, enduction et analogue, d'une composition telle que définie ci-dessus, puis vulcanisés.

D'autres caractéristiques et avantages de l'invention apparaîtront de la description qui suit d'exemples de réalisation de cette dernière.

EXEMPLE 1

On prépare à partir de caoutchouc polyéthylène chlorosulfoné disponible sous forme de chips et de caoutchouc butyle halogéné, sous forme de balles de gomme, un mélange ayant la composition suivante, en parties en poids :

| | |
|---|---|
| caoutchouc butyle halogéné | 84 |
| caoutchouc polyéthylène chlorosulfoné | 16 |
| magnésie | 2 |
| charge noir de carbone | 30 |
| charge blanche | 10 |
| plastifiant | 5 |
| agent anti-chaleur | 1 |

Dans ce mélange, la magnésie joue son rôle habituel d'agent retardateur, la charge de noir de carbone conditionne la dureté du matériau, et l'agent anti-chaleur, -qui est du type des amines-, fait que le matériau obtenu présente une bonne durée de vie y compris lorsqu'il est exposé à la chaleur et aux intempéries.

A la composition ainsi obtenue, on ajoute alors le moyen de vulcanisation ayant la composition suivante, également en parties en poids :

| | |
|---|---|
| oxyde de zinc | 2 |
| MBTS | 0,5 |
| TMTD | 0,5 |
| soufre | entre 0 et 1 |

4

Après mélange du moyen de vulcanisation et de la composition telle que définie ci-dessus, on obtient un produit prêt à l'emploi, qui peut être stocké, (pendant quelques semaines) ou immédiatement mis en oeuvre.

Pour ce faire, et après mise en forme par extrusion, moulage, calandrage, confection, enduction sur un support textile,..... etc.., on procède à une vulcanisation, en fait à une co-vulcanisation des deux élastomères de base, la vulcanisation étant conduite comme usuel à des températures comprises entre 150 et 180°C et par des moyens connus dans ce but.

On obtient ainsi un produit "homogène" ayant la forme et les caractéristiques souhaitées pour son utilisation, par exemple en tant que gant, joint, couche unique d'un tissu propre à former des objets de protection comme des combinaisons, des bâches, ou analogues, ...etc.

Les produits obtenus présentent une bonne tenue aux hydrocarbures, nonobstant la présence de caoutchouc butyle dont on sait qu'il n'est pas résistant aux hydrocarbures, et aussi de bonnes caractéristiques d'imperméabilité à des produits d'agression chimique, comme l'ypérite et cela nonobstant le fait que le polyéthylène chlorosulfoné ne montre pas à lui seul une bonne tenue à ce type d'agression.

Des essais de résistance à l'ypérite (en tant qu'agent agresseur de référence) montrent que le matériau a une résistance d'au moins 24 heures et qu'après déconta mination, à l'aide d'une solution basique, la pièce en ledit matériau conserve ses caractéristiques.


EXEMPLE 2

On prépare, comme décrit ci-dessus pour l'exemple 1, un mélange ayant la composition suivante en parties en poids :

| caoutchouc butyle halogéné | 50 |
| caoutchouc polyéthylène chlorosulfoné | 50 |
| magnésie | 5 |
| charge de noir de carbone | 60 |
| charge blanche | 20 |
| plastifiant | 20 |
| agent anti-chaleur | 1 |

A cette composition est alors ajouté le moyen de vulcanisation ayant la composition suivante, elle aussi en parties en poids :

| oxyde de zinc | 5 |
| MBTS | 2 |
| TMTD | 2 |
| soufre | de 0 et 1 |

Après mélange du moyen de vulcanisation et de la composition d'élastomère et d'ingrédients, on procède à la mise en forme puis à la vulcanisation, comme indiqué ci-dessus.

Pour un tel matériau, les caractéristiques de résistance à une agression chimique, par exemple à l'ypérite servant de produit de référence, et la rapidité et facilité de décontamination du matériau après l'attaque par l'ypérite sont les mêmes que pour l'exemple 1.


EXEMPLE 3

On prépare, comme décrit ci-dessus pour les exemple 1 et 2, un mélange ayant la composition suivante en parties en poids :

| caoutchouc butyle halogéné | 70 |
|---|---|
| caoutchouc polyéthylène chlorosulfoné | 30 |
| magnésie | 4 |
| noir de carbone | 50 |
| acide stéarique | 2 |
| huile | 10 |
| agent anti-oxygène | 1 |

A cette composition est alors ajouté le moyen de vulcanisation ayant la composition suivante, elle aussi en parties en poids :

| oxyde de zinc | 5 |
|---|---|
| MBTS | 1 |
| TMTD | 0,8 |
| soufre | 0,4 |

Après mélange du moyen de vulcanisation et de la composition d'élastomère et d'ingrédients, on procède à la mise en forme puis à la vulcanisation, comme indiqué ci-dessus.

Le matériau ainsi obtenu présente lui aussi d'excellentes caractéristiques de résistance à une agression chimique, par exemple à l'ypérite servant de produit de référence (résistance supérieure à 24 heures) et une grande rapidité et facilité de décontamination après attaque par l'ypérite.

Il apparaît ainsi que l'on fournit, par l'invention, un matériau du type élastomère, résistant bien aux agressions chimiques de fluides gazeux ou liquides, notamment du type NBC, en particulier à celle des produits comme l'ypérite servant de produit de référence et qui présente en outre la propriété de permettre une décontamination simple et rapide après agression sans perdre ses caractéristiques initiales.

**Revendications**

1. Matériau du type élastomère à base d'un mélange de caoutchouc du type polyéthylène chlorosulfoné, de caoutchouc du type butyle halogéné et d'ingrédients usuels de fabrication des élastomères, comme des charges de renfort, des plastifiants, des agents de protection et analogues, caractérisé en ce qu'il renferme de 85 à 50 parties en poids de caoutchouc butyle halogéné et de 15 à 50 parties en poids de polyéthylène chlorosulfoné pour résister aux agressions chimiques, notamment du type NBC d'une part et pouvoir être facilement décontaminé, d'autre part.

2. Matériau selon la revendication 1, caractérisé en ce qu'il comprend, en parties en poids :

| caoutchouc butyle halogéné | 85 à 50 |
|---|---|
| caoutchouc polyéthylène chlorosulfoné | 15 à 50 |
| magnésie | 2 à 5 |
| charge de noir de carbone | 30 à 60 |
| charge blanche | 0 à 20 |
| plastifiant | 5 à 20 |
| agent anti-chaleur | 1 |

3. Matériau selon la revendication 2, caractérisé en ce qu'il comprend, en parties en poids :

| caoutchouc butyle halogéné | 70 |
|---|---|
| caoutchouc polyéthylène chlorosulfoné | 30 |
| magnésie | 4 |
| noir de carbone | 50 |
| acide stéarique | 2 |
| huile | 10 |
| agent anti-oxygène | 1 |

4. Composition vulcanisable à base d'un mélange de caoutchouc polyéthylène chlorosulfoné, de caoutchouc butyle halogéné, d'ingrédients usuels comme des charges renforçantes, des plastifiants, des agents de protection et analogues et un moyen de vulcanisation, caractérisée en ce que pour la fabrication d'un matériau résistant aux agressions chimiques, notamment du type NBC et à décontamination facile elle comprend, en parties en poids :

| caoutchouc butyle halogéné | 70 |
|---|---|
| caoutchouc polyéthylène chlorosulfoné | 30 |
| magnésie | 4 |
| noir de carbone | 50 |
| acide stéarique | 2 |
| huile | 10 |
| agent anti-oxygène | 1 |
| oxyde de zinc | 2 à 5 |
| MBTS | 0,5 à 2 |
| TMTD | 0,5 à 2 |
| soufre | 0 à 1 |

5. Composition selon la revendication 4, caractérisée en ce qu'elle comprend, en parties en poids :

| caoutchouc butyle halogéné | 70 |
|---|---|
| caoutchouc polyéthylène chlorosulfoné | 30 |
| magnésie | 4 |
| noir de carbone | 50 |
| acide stéarique | 2 |
| huile | 10 |
| agent anti-oxygène | 1 |
| oxyde de zinc | 4 |
| MBTS | 1 |
| TMTD | 0,8 |
| soufre | 0,4 |

6. Produits façonnés comme des joints, des gants, des combinaisons, des toiles ou bâches et analogues, caractérisé en ce que pour résister aux agressions chimiques et être à décontamination facile, ils sont fabriqués par mise en forme par extrusion, moulage, calandrage, enduction et analogue, d'une composition selon la revendication 4 ou la revendication 5, puis vulcanisés.

7. Utilisation d'un matériau du type élastomère résultant de la vulcanisation d'une composition à base de caoutchouc du type polyéthylène chlorosulfoné et de caoutchouc du type butyle halogéné dans des proportions de 15 à 50 parties en poids et 85 à 50 parties en poids, respectivement, pour façonner des produits comme des joints, des gants, des combinaisons, des toiles ou bâches et analogues résistant aux agressions chimiques et à décontamination facile.

8. Utilisation selon la revendication 7, caractérisée en ce que le matériau comprend, en parties en poids :

7

| caoutchouc butyle halogéné | 70 |
| caoutchouc polyéthylène chlorosulfoné | 30 |
| magnésie | 4 |
| noir de carbone | 50 |
| acide stéarique | 2 |
| huile | 10 |
| agent anti-oxygène | 1 |

9. Utilisation selon la revendication 7, caractérisée en ce que le matériau comprend, en parties en poids :

| caoutchouc butyle halogéné | 70 |
| caoutchouc polyéthylène chlorosulfoné | 30 |
| magnésie | 4 |
| noir de carbone | 50 |
| acide stéarique | 2 |
| huile | 10 |
| agent anti-oxygène | 1 |
| oxyde de zinc | 4 |
| MBTS | 1 |
| TMTD | 0,8 |
| soufre | 0,4 |

Office européen
des brevets

RAPPORT DE RECHERCHE EUROPEENNE

Numero de la demande

EP  90 40 0447

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A- 853 738 (THE FIRESTONE TIRE & RUBBER) * Page 1, lignes 51-55; page 3, exemple I * --- | 1-9 | C 08 L 23/28 C 08 L 23/34 C 08 K 13/02 A 62 D 5/00 // (C 08 L 23/28 C 08 L 23:34 C 08 K 3:06 C 08 K 5:47 C 08 K 5:40 ) |
| X | FR-A-2 211 474 (ESSO RESEARCH & ENGINEERING) * Revendications 1,4 * --- | 1-9 | |
| X | US-A-3 088 930 (W.P. CAIN et al.) * Colonne 1, lignes 47-64; colonne 2, lignes 49-56 * --- | 1-9 | |
| A | US-A-4 587 302 (D.A. BERTA) * Résumé * ----- | 1 | |

|  |
|---|
| DOMAINES TECHNIQUES RECHERCHES (Int. Cl.5) |
| C 08 L C 08 K A 62 D |

**Le présent rapport a été établi pour toutes les revendications**

| Lieu de la recherche | Date d'achèvement de la recherche | Examinateur |
|---|---|---|
| LA HAYE | 30-06-1990 | GOOVAERTS R.E. |

EPO FORM 1503 03.82 (P0402)